(19) Europäisches Patentamt

European Patent Office

Office européen des brevets

(11) **EP 1 282 153 A2**

(12) **EUROPÄISCHE PATENTANMELDUNG**

(43) Veröffentlichungstag:
**05.02.2003 Patentblatt 2003/06**

(51) Int Cl.7: **H01J 61/35**, H01J 61/12,
H01J 65/04, C04B 41/45,
H01J 9/20, C04B 41/46

(21) Anmeldenummer: **02015380.5**

(22) Anmeldetag: **10.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **30.07.2001 DE 10137015**

(71) Anmelder: **Patent-Treuhand-Gesellschaft für elektrische Glühlampen mbH**
**81543 München (DE)**

(72) Erfinder:
• **Arnold, Erich, Dr.**
**55127 Mainz (DE)**
• **Hirrle, Renate, Dr.**
**86163 Augsburg (DE)**
• **Wille, Christina**
**86159 Augsburg (DE)**
• **Witzke, Hans-Dieter, Dr.**
**12524 Berlin (DE)**

(54) **Entladungsgefäss mit Excimerfüllung, zugehörige Entladungslampe und Verfahren zur Herstellung des Entladungsgefässes**

(57)  Ein Entladungsgefäß (3) mit Excimerfüllung, umfasst einen Sockel (5), Elektroden (6,7), sowie eine Füllung mit mindestens einem Edelgas und einem Halogen, die im Betrieb der Lampe (1) zusammen ein Excimer bilden, wobei das Entladungsgefäß (3) aus Quarzglas gefertigt ist. Die Innenwand des Entladungsgefäßes (3) ist vollständig mit einer Passivierungsschicht (15) eines Metalloxids der Metalle Al, Hf, Y oder Sc oder deren Mischoxide überzogen, wobei die Schicht (15) amorphe Struktur besitzt und ihre Schichtdicke 20 bis 200nm beträgt.

FIG. 4

EP 1 282 153 A2

## Beschreibung

### Technisches Gebiet

Die Erfindung geht aus von einem Entladungsgefäß mit Excimerfüllung und zugehörige Entladungslampe gemäß dem Oberbegriff des Anspruchs 1. Bei der Excimerfüllung handelt sich um eine Füllung, die ein Edelgas und ein Halogen umfasst, die zusammen unter Betriebsbedingungen ein Excimer bilden, insbesondere unter Heranziehung aggressiver Füllkomponenten wie vor allem den Halogenen F und/oder Cl.

### Stand der Technik

Aus der US-A 5 898 265 ist die Anwendung von Schutzschichten in Leuchtstofflampen bekannt, welche zwischen Entladungsgefäß und Leuchtstoffschicht aufgebracht werden und vor Vergrauung der Lampen infolge Hg-Bindung an das Lampenglas schützt. Die Schichten werden überwiegend durch Suspensionen nanometerfeiner kristalliner Partikel, insbesondere aus $Al_2O_3$, aufgebracht. Meist wird AlonC verwendet, wobei es sich um kristallines, feinstdisperses $\gamma$-$Al_2O_3$ handelt mit einem mittleren Korndurchmesser von ca. 10 nm. Es werden auch Mischschichten aus $\gamma$-$Al_2O_3$ und $\alpha$-$Al_2O_3$ beschrieben, die für die gleiche Anwendung weitere Vorteile bringen, siehe EP-A 639 852. Die verwendeten Schichten sind ausschließlich kristallin, werden über eine Suspension aufgetragen und haben Schichtdicken im Mikrometerbereich.

Das gleiche Prinzip wird auch für Hg-UV-Strahler verwendet. CH-A- 672 380 beschreibt eine Diffusionssperrschicht aus Hf-, La-, Th-, Al-Oxid für Hg in UV-Strahlern, die eine Füllung aus Hg (1 mbar) und Ar (0,7 mbar) verwenden und deren Entladungsgefäß aus Quarzglas wenig belastet wird: die Wandtemperatur liegt im Betrieb bei etwa 200 °C. Auch hier soll die Schwärzung des Kolbens reduziert werden. Es werden Schichtdicken der Sperrschicht von 10 bis 1000 nm angewendet. Die Schichten werden mit Hilfe organischer oder anorganischer Precursoren mittels Tauchbeschichtung aufgebracht. Als Auslaufgeschwindigkeit der Beschichtungslösung ist 50-80 cm/min gewählt, was auf eine hohe Schichtdicke schließen lässt. Die Temperung erfolgte im Falle von $Al_2O_3$ bei 600°C. Für $HfO_2$ wurde eine Verbesserung der Transmission über die Lebensdauer (3000 Std.) nachgewiesen.

Die US-A 5 270 615 beschreibt Schutzschichten, die in Metallhalogenid-Hochdruckentladungslampen als Diffusionsbarriere vor dem Angriff der Metallhalogenide auf das Quarzglasentladungsgefäß wirken sollen. Es werden Mehrfachschichten aus Oxiden des Ta oder Nb sowie aus $Al_2O_3$ aufgebracht, um die thermische Ausdehnung allmählich anzupassen.

## Darstellung der Erfindung

Es ist Aufgabe der vorliegenden Erfindung, ein Entladungsgefäß mit Excimerfüllung bzw. eine zugehörige Lampe gemäß dem Oberbegriff des Anspruchs 1 bereitzustellen, die sich durch eine hohe Lebensdauer auszeichnet, obwohl sie hochaggressive Füllstoffe verwendet.

Diese Aufgabe wird durch die kennzeichnenden Merkmale des Anspruchs 1 gelöst. Besonders vorteilhafte Ausgestaltungen finden sich in den abhängigen Ansprüchen.

Als hochaggressive Füllkomponente konnte bisher das Halogen Fluor nicht in Glasgefäßen verwendet werden. In abgeschwächter Form gilt dies auch für Chlor.

Quarzglas als bevorzugtes Material für das Entladungsgefäß von Lampen stößt auf Grenzen infolge von Reaktionen mit aggressiven Füllkomponenten wie Fluor, Chlor sowie mit Abstrichen für Brom, Jod. Deshalb waren bisher langlebige Excimerlampen nur mit dem Füllsystem $Xe_2^*$ möglich, das bei 172 nm emittiert. Neue Füllsysteme für Excimerlampen (z.B. XeCl: $\lambda$=308 nm; KrCl: $\lambda$=222 nm; XeF: $\lambda$=351 nm; KrF: $\lambda$=248 nm; ArF: $\lambda$=193 nm) sind von großem Interesse aufgrund der weiteren diskreten UV-Wellenlängen, die für diverse technische Prozesse zur Anwendung kommen. Bereits existierende chloridhaltige Systeme sind nicht optimal eingestellt.

Ein typischer Kaltfülldruck der gesamten Füllung dieser Excimerstrahler liegt bei 20 bis 400 mbar, wobei der Partialdruck der Halogenverbindung typisch zwischen 1 und 10 % des gesamtem Fülldrucks ausmacht.

Fluor, als besonders aggressives Füllungsmedium, wurde bisher in Excimerstrahlern in Quarzglasgefäßen nicht realisiert. Die Fluoratome und - ionen, die sich in der Entladung bilden, reagieren sofort mit dem Quarzglas zu Siliziumfluorid und Sauerstoff. Durch diesen Fluorverbrauch steht weniger Fluor für die Entladung zur Verfügung, es können sich weniger Edelgasexcimere bilden und innerhalb von Sekunden kann die spezifische Excimer-Strahlung (für XeF* bei 351 nm) nicht mehr nachgewiesen werden. Um trotzdem Entladungslampen mit derartigen Füllkomponenten betreiben zu können, muss ein Umhüllungsmaterial gefunden werden, welches diesem Angriff standhält. Ähnliches gilt für Chlor in abgeschwächter Form.

Eine Lösung stellt an sich die Verwendung von polykristallinem Aluminiumoxid (PCA) für das Entladungsgefäß dar, das sich von Natur aus passiv gegenüber der fluorhaltigen Füllung verhält. Der Einsatz einer derartigen Keramik bringt allerdings verschiedene Nachteile mit sich. So sind der vakuumdichte Verschluss und die Formgebung sehr viel aufwendiger und teurer als bei Quarzglas.

Durch eine Passivierung des Quarzglases mit einer amorphen, 20 bis 500 nm (bevorzugt höchstens 200 nm) dünnen, transparenten $Al_2O_3$-Schutzschicht kann die gut beherrschte Quarzglastechnologie beibehalten werden. Zudem lassen sich die optischen Vorteile von Quarzglas gegenüber Keramik ausnutzen. Die Passivierung muss auf der gesamten mit der Entladung in Wechselwirkung stehenden Oberfläche des Entladungsgefäßes erfolgen.

Bisher war es nicht möglich, Excimerlampen mit Fluoridkomponenten mit einem Entladungsgefäß aus Quarzglas kommerziell zu nutzen. Die diskreten UV-Wellenlängen, die insbesondere fluoridhaltige Strahler aussenden, waren daher bisher nicht für Excimerlampen verfügbar.

Wesentlich ist nun, dass die Schicht amorph ist. Diese amorphe Schicht führt zu einer enormen Lebensdauererhöhung der Lampe, die erstmals überhaupt eine industrielle Nutzung von Fluorexcimeren ermöglicht. Sie liegt bei mindestens 100 Std., je nach Ausführungsform übertrifft sie sogar 1000 Std. Dagegen konnte eine Barrierewirkung bei kristallinen Schichten aus dem gleichen Material erstaunlicherweise nicht nachgewiesen werden.

Durch das Aufbringen geeigneter Schichten aus amorphem $Al_2O_3$ wird eine Passivierung der Oberfläche des Quarzglasgefäßes gegenüber im Plasma auftretender Spezies erreicht. Als geeignet erweist sich neben $Al_2O_3$ als Beschichtungsmaterial auch Oxide des Hf, Y, oder Sc oder deren Mischoxide.

Eine grundlegende Forderung an die Schicht ist die vollständige Bedeckung der inneren Oberfläche des Entladungsgefäßes, um jegliche Reaktionen zwischen Quarzglas und Füllung zu unterbinden. Die Schicht darf demzufolge weder Risse noch offene Porosität aufweisen. Um dies noch zuverlässiger sicherzustellen, empfiehlt sich das Auftragen einer zweiten (oder mehrerer) Schicht aus dem gleichen Material.

Die Herstellung der Schicht erfolgt durch das Sol-Gel-Verfahren oder alternativ nach einem CVD-Verfahren. Details zu einem CVD-Verfahren, welches für Innenbeschichtungen geeignet ist, sind beispielsweise in dem folgenden Artikel zu finden: Segner, J.: Plasma Impulse Chemical Vapor Deposition. In: Thin films for optical systems ed. by F. R. Flory, New York (u.a.) Dekker, 1995, S. 203-229.

Mit Hilfe des Sol-Gel-Verfahrens ist es über eine modifizierte Tauchbeschichtung ohne größeren Aufwand möglich, die Innenoberfläche des Entladungsgefäßes vollständig zu beschichten. Als Precursor wird ein organisches Sol auf der Basis von Metallalkoxid, insbesondere Aluminiumalkoxid, eingesetzt. Die Auslaufgeschwindigkeit des Sols bestimmt die Schichtdicke und die Qualität der Schicht und muss deshalb regelbar sein. Um rissfreie Schichten herzustellen, werden Auslaufgeschwindigkeiten im Bereich 4-10 cm/min bevorzugt. Bei höheren Geschwindigkeiten erhöht sich die Gefahr der Rissbildung. Maximal sind mit der Soltechnik etwa 20 cm/min tolerierbar, der Maximalwert hängt jedoch vom verwendeten Sol ab. Dem Beschichtungsvorgang schließt sich eine Trocknung an, wodurch der Nassfilm in einen Gelfilm übergeht. Dieser Gelfilm wird durch eine Wärmebehandlung im Ofen unter Abspaltung organischer Komponenten in Metalloxid ($Al_2O_3$) umgewandelt. Es hat sich gezeigt, dass nur Schichten, die bei Temperaturen von 400 bis 850 °C, bevorzugt 500-800°C, wärmebehandelt wurden, eine Barrierewirkung gegenüber Fluorkomponenten zeigen und eine deutliche Verbesserung der Barrierewirkung gegenüber anderen Halogen zeigen. Durch Röntgenuntersuchungen wurde nachgewiesen, dass die Schichten (bzw. Pulver) welche bei diesen Temperaturen behandelt wurden, röntgenamorph waren. Bei Temperaturen über 850°C entstehen zunächst kristalline Übergangsaluminiumoxide ($\gamma$-, $\delta$- und $\theta$-Phase) und ab ca. 1100°C das thermodynamisch stabile $\alpha$-$Al_2O_3$. Alle Schichten, bei denen diese kristalline Phasen nachgewiesen wurden, zeigten keine Barrierewirkung gegenüber der fluorhaltigen Füllung und eine nur schwache Barrierewirkung gegen andere Halogene.

Die $Al_2O_3$-Schichten, welche bei Temperaturen von 400 bis 850 °C, bevorzugt bei 500-800°C, behandelt wurden, erscheinen strukturlos. Die Partikel in der Schicht sind typisch nanometergroß. Die Schichten sind rissfrei und porenfrei. Die Schichtdicke beträgt insgesamt etwa 20 bis 500 nm.

Bei Einzelschichten liegt die Schichtdicke bevorzugt zwischen 50 und 100 nm.

Vorteilhaft sind Schichtsysteme mit zwei bis fünf Schichten um etwaige Beschichtungsfehler zu kompensieren und Defekte zu minimieren. Häufig ist eine Doppelbeschichtung bereits ausreichend für eine hermetische Passivierung der Oberfläche.

## Figuren

Im folgenden soll die Erfindung anhand mehrerer Ausführungsbeispiele näher erläutert werden. Es zeigen:

Figur 1     eine Entladungslampe mit Passivierungsschicht;

Figur 2     ein weiteres Ausführungsbeispiel einer Entladungslampe mit Passivierungsschicht;

Figur 3     den zeitlichen Verlauf der Excimerstrahlung in einem unbeschichteten Entladungsgefäß;

Figur 4     den zeitlichen Verlauf der Excimerstrahlung in einem beschichteten Entladungsgefäß.

## Beschreibung der Zeichnungen

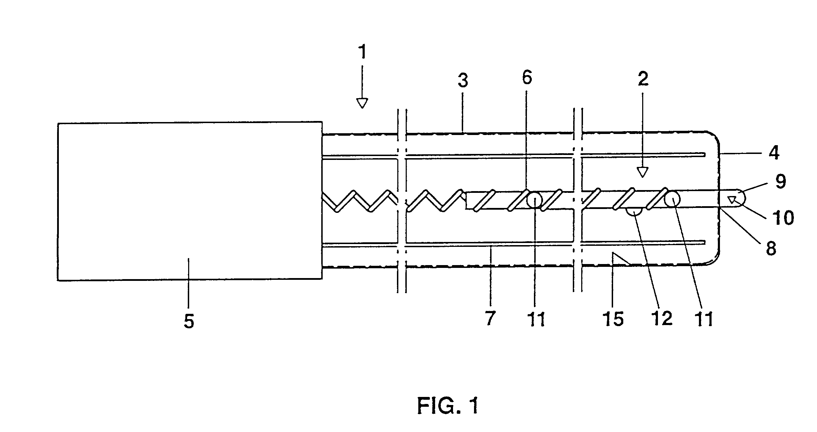

Excimerstrahler werden als UV/VUV-Strahler für die Oberflächen- und Wafersäuberung, Ozonproduktion und zu Reinigungszwecken verwendet. Eine derartige Lampe ist beispielsweise in WO-A 01/35442 beschrieben. Im Prinzip handelt es sich dabei, wie in Figur 1 gezeigt, um eine Lampe 1 mit einem Entladungsvolumen 2 in einem Entladungsgefäß 3 aus Quarzglas.

Es ist einseitig von einem Sockel 5 gehalten. Zentrisch im Entladungsgefäß ist eine wendelförmige Kathode 6 angeordnet. Auf der Außenseite des Entladungsgefäßes befinden sich mehrere streifenförmige Anoden 7. Als Halterung 10 weist die Lampe ein axiales Stützrohr 9 auf, welches von einer Stirnwandung 4 in das Entladungsvolumen hineinragt. Noppen 11, 12 haltern die Kathode 6. Die Innenwandung des Entladungsgefäßes ist mit einer Passivierungsschicht 15 aus $Al_2O_3$ vollständig überzogen. Sie ist als Doppelschicht ausgeführt. Die Dicke der Schicht beträgt insgesamt etwa 200 nm.

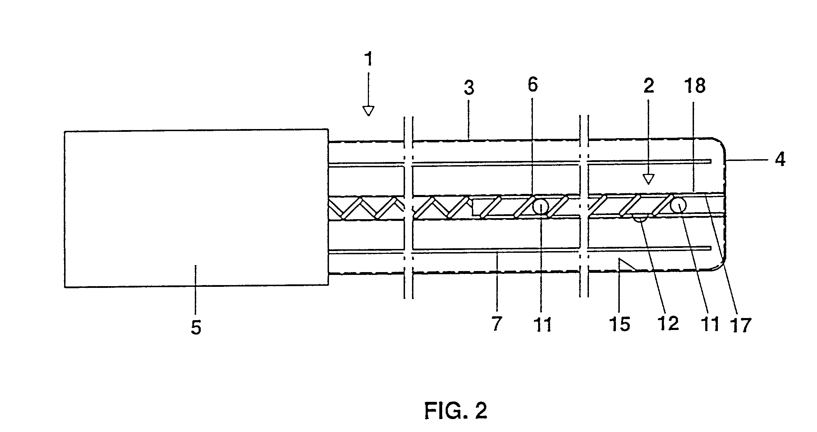

Eine weitere bevorzugte Ausführungsform ist in Figur 2 dargestellt. Ähnliche Merkmale haben hier gleiche Bezugsziffern wie in Fig. 1. es handelt sich hier um ein Lampe mit beidseitig dielektrisch behinderter Entladung. Das bedeutet, dass auch die innen liegende Elektrode zusätzlich von einer dielektrischen Hülle 17 in Rohrform ummantelt ist, die die innere Elektrode hermetisch gegen das Entladungsvolumen abschließt. Die Oberfläche dieser Hülle 17 ist gegen das Entladungsvolumen mit einer Passivierungsschicht 18 geschützt. Der Pumpstutzen ist dabei zum Entladungsvolumen hin sockelseitig angesetzt (nicht sichtbar). Auf diese Weise ist auch die innere Elektrode gegen die aggressive Füllung geschützt, wodurch die Lebensdauer steigt.

Als Entladungsgefäß für die Excimerstrahler werden rohrförmige Quarzglaskolben verwendet. Typische Abmessungen sind 20 mm Durchmesser und ca. 20 cm Länge. Da die Entladung im Innern der Lampe stattfindet, ist das Rohr innenbeschichtet. Die Schicht aus $Al_2O_3$ hat vorteilhaft eine Dicke von 100 bis 250 nm.

Die Herstellung der Schicht erfolgt mit dem Sol-Gel-Verfahren gemäß folgender Schritte:

Um die Oberfläche zu reinigen und zu aktivieren, werden die Rohre vor der Beschichtung vorbehandelt. Die Innenbeschichtung der Rohre erfolgt über eine modifizierte Tauchbeschichtung durch Befüllen des Rohrs und anschließendem Auslaufen der Beschichtungslösung. Da die Auslaufgeschwindigkeit ein entscheidender Parameter für die Schichtdicke und die Schichtqualität ist, muss sie reproduzierbar eingestellt werden. Rissfreie Schichten wurden mit Auslaufgeschwindigkeiten von 4-20 cm/min, bevorzugt höchstens 10 cm/min erzeugt. Je geringer die Auslaufgeschwindigkeit gewählt wird, desto dünner wird die Schicht (bezogen auf die Verwendung desselben Sols).

Der Beschichtung schließt sich eine Trocknung der Schicht mit Infrarotstrahlern sowie eine Wärmebehandlung im Ofen an (bei etwa 600°C). Während der Ofenbehandlung wandelt sich die Gelschicht unter Abspaltung organischer Anteile in $Al_2O_3$ um. Die Rohre wurden doppelt beschichtet. Nach der zweiten Beschichtung wurden die Rohre typischerweise 1h bei 500 bis 800°C getempert.

Die beschichteten Entladungsgefäße wurden an einem Ende verschlossen. Am zweiten Ende wurde ein Pumprohr angesetzt. Die Rohre wurden evakuiert und gleichzeitig mit Hilfe eines Rohrofens bis ca. 450°C ausgeheizt, um adsorbiertes Wasser zu beseitigen. Anschließend wurde das Entladungsgefäß mit Fluor und Xenon (typisch sind 1 mbar $SF_6$ und 30 mbar Xenon) gefüllt um XeF* zu bilden. Die Anregung des Plasmas erfolgte mittels zweier Spiralelektroden, die an der Außenoberfläche des Entladungsgefäßes in einer Entfernung von 30 mm voneinander angeordnet wurden und an die eine hochfrequente Wechselspannung angelegt wurde. Die eingekoppelte Leistung lag bei 20 W. Das Plasma, welches sich zwischen und unter den zwei Elektroden bildet, emittiert Strahlung der Wellenlänge 351 nm (UV-A-Strahlungsbereich). Folgende Reaktionen laufen im Innern der Lampe ab:

$$SF_6 + e^- \rightarrow SF_5^- + F$$

$$Xe_2^* + F_2 \rightarrow XeF^* + Xe + F$$

$$Xe_2^+ + F^- + M \rightarrow XeF^* + Xe + M$$

$$XeF^* \rightarrow Xe + F + \nu \ (351 \ nm)$$

Die Strahlung wurde mit einem Spektrometer aufgenommen. Die Stärke des UV-A-Signals korreliert mit der Fluorkonzentration im Plasma. Die Versuche wurden mit konstanten Bedingungen zu Vergleichszwecken auch an unbeschichteten Entladungsgefäßen durchgeführt.

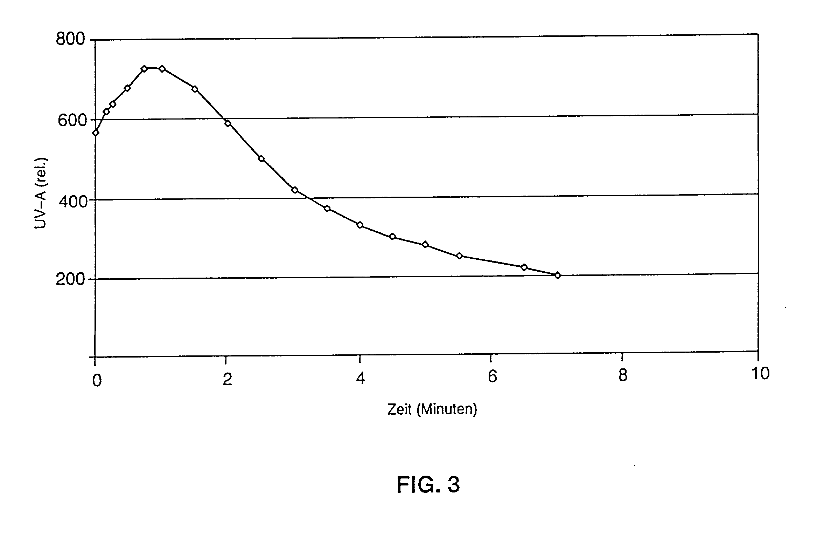

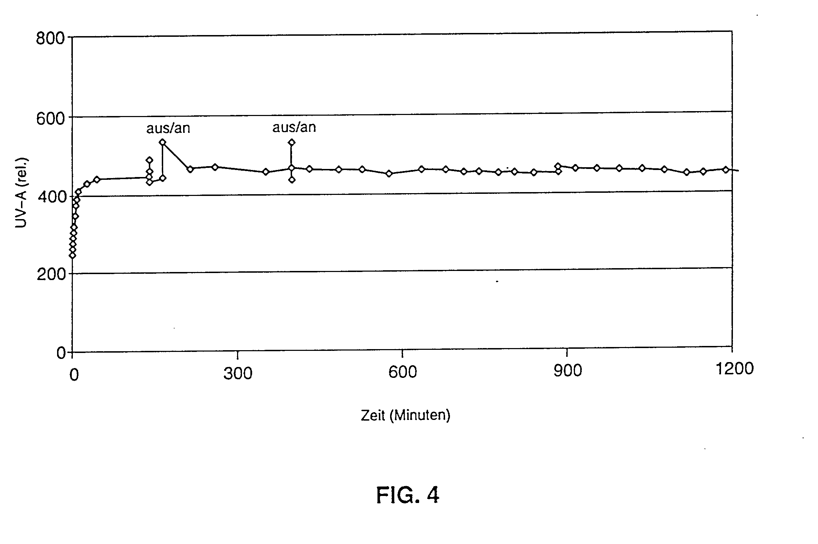

Die Figuren 3 und 4 zeigen den zeitlichen Verlauf der XeF* Excimer-Strahlung für ein unbeschichtetes (Figur 3) und beschichtetes (Figur 4) Entladungsgefäß. Nach dem Starten der Entladung wird XeF* gebildet und nach einigen Sekunden ist die spezifische Strahlung bei 351 nm nachweisbar. Das Strahlungssignal geht bei unbeschichtetem Entladungsgefäß (Figur 3) nach kurzer Zeit bereits in die Sättigung über, um anschließend bereits innerhalb einiger Sekunden abzufallen, was auf den Verbrauch von Fluor-Spezies infolge von Wandreaktionen mit dem Quarzglas zurückzuführen ist.

Figur 4 zeigt den zeitlichen Verlauf der XeF* Excimer-Strahlung mit einem zweifach beschichteten und anschließend bei 600°C getemperten Entladungsgefäß. Das UV-A-Signal geht nach wenigen Minuten in die Sättigung und bleibt über viele Stunden konstant. Insgesamt wird eine Lebensdauerverlängerung um mindestens den Faktor 1000 gegenüber unbeschichteten Lampen erreicht. Die Schicht führt zu einer Passivierung der Quarzglasoberfläche gegenüber der reaktiven Spezies aus dem Plasma.

Dieses Ausführungsbeispiel zeigt die Funkti-

onsfähigkeit der dünnen $Al_2O_3$-Schicht als Passivierungsschicht für Quarzglasgefäße gegenüber aggressiven Lampenfüllstoffen. Ähnlich verhalten sich auch Passivierungsschichten aus Oxiden des Hf, Y, oder Sc oder entsprechenden Mischoxiden.

Weitere Versuche zeigten, dass die Temperung der Schichten ein entscheidender Parameter für die Passivierungseigenschaften ist. Lediglich Schichten, die bei Temperaturen von 400-850 °C getempert wurden, zeigen den Passivierungseffekt. Er ist bei Temperaturen von 500 bis 800 °C besonders ausgeprägt.

Schließlich zeigte sich, dass beim Vergleich einer Einzelschicht mit einer Doppelschicht die Einzelschicht auch bei insgesamt gleicher Schichtdicke weniger gute Ergebnisse liefert, weil die Herstellung weniger gut kontrollierbar ist als bei einer Doppelschicht. Schichtdicken von 150 nm und mehr sollten daher bevorzugt als Mehrfachschichten realisiert werden.

Mehrfachbeschichtungen werden im Prinzip gemäß den einzelnen Schritten einer Einfachschicht aufgetragen, ohne dass jedoch die Verfahrensparameter im Detail übereinstimmen müssen.

**Patentansprüche**

1. Entladungsgefäß mit Excimerfüllung, mit Elektroden (6,7), wobei die Füllung mindestens ein Edelgas und ein Halogen umfasst, die zusammen unter Betriebsbedingungen ein Excimer bilden, wobei das Entladungsgefäß (3) aus Quarzglas gefertigt ist, **dadurch gekennzeichnet, dass** die Innenwand des Entladungsgefäßes vollständig mit einer Passivierungsschicht (15) eines Oxids, gebildet aus zumindest einem der Metalle Al, Hf, Y oder Sc, überzogen ist, wobei die Schicht amorphe Struktur besitzt und ihre Schichtdicke insgesamt 20 bis 500 nm beträgt.

2. Entladungsgefäß nach Anspruch 1, **dadurch gekennzeichnet, dass** die Schichtdicke 100 bis 200 nm beträgt.

3. Entladungsgefäß nach Anspruch 1, **dadurch gekennzeichnet, dass** ein System aus zwei bis fünf Schichten verwendet wird.

4. Entladungsgefäß nach Anspruch 1, **dadurch gekennzeichnet, dass** das Halogen Chlor oder Fluor ist.

5. Entladungsgefäß nach Anspruch 1, **dadurch gekennzeichnet, dass** zumindest eine Elektrode (6) sich innerhalb des Entladungsgefäßes (3) befindet und diese durch ein Hülle (17) aus Glas gegen das Entladungsvolumen geschützt ist, wobei die entladungsseitige Oberfläche der Hülle ebenfalls durch eine Passivierungsschicht (18) geschützt ist.

6. Entladungsgefäß nach Anspruch 1, **dadurch gekennzeichnet, dass** die Schicht nach dem Sol-Gel-Verfahren oder einem CVD-Verfahren hergestellt ist.

7. Entladungslampe mit einem Entladungsgefäß nach einem der vorhergehenden Ansprüche.

8. Verfahren zur Herstellung eines Entladungsgefäßes nach Anspruch 1 mittels Sol-Gel-Verfahren, **gekennzeichnet durch** folgende Verfahrensschritte:

   a) Bereitstellen und Reinigen eines Rohrs aus Quarzglas;
   b) Eintauchen bzw. Füllen des Rohres in einer Beschichtungslösung, die ein organisches Sol mit einem Metall-Alkoxid-Precursor enthält;
   c) Auslaufenlassen der Lösung mit einer Geschwindigkeit von 4 bis 20 cm/min, wobei der Nassfilm in einen Gelfilm übergeht;
   d) Wärmebehandlung des Gelfilms bei einer Temperatur von 400 bis 850 °C, wodurch eine amorphe Schicht des Metalloxids entsteht.

9. Verfahren nach Anspruch 8, **dadurch gekennzeichnet, dass** eine Mehrfachschicht erzeugt wird, indem die Verfahrensschritte gemäß Anspruch 8 wiederholt werden.

FIG. 1

FIG. 2

FIG. 3

EP 1 282 153 A2

FIG. 4